# EUROPÄISCHE PATENTSCHRIFT

(11) **EP 3 957 433 B1**
(45) Veröffentlichungstag und Bekanntmachung des Hinweises auf die Patenterteilung: **28.01.2026**
(21) Anmeldenummer: 21182636.7
(22) Anmeldetag: 30.06.2021
(51) Int. Cl.: B23Q 3/154, B23Q 1/00

(54) **SPANNSYSTEM**
CLAMPING SYSTEM
SYSTÈME DE SERRAGE

(30) Priorität: 19.08.2020 DE 102020121786; 11.09.2020 DE 102020123776
(43) Veröffentlichungstag der Anmeldung: 23.02.2022
(73) Patentinhaber: SAV GmbH, 90451 Nürnberg (DE)
(72) Erfinder: Leikauf, Dieter, 90451 Nürnberg (DE)
(74) Vertreter: Ruckh, Rainer Gerhard

(56) Entgegenhaltungen:
- EP-A2- 2 742 363
- WO-A2-03/009972
- WO-A2-2008/142716
- FR-A- 1 414 151
- JP-A- 2005 118 908
- KR-B1- 101 613 162
- US-A1- 2010 013 583

## Beschreibung

Die Erfindung betrifft ein Spannsystem gemäß dem Oberbegriff des Anspruchs 1 (siehe z.B. US 2010/013583 A1).

Ein derartiges Spannsystem ist als magnetisches Spannsystem ausgebildet, mittels dessen Werkstücke durch Magnetkräfte auf einer Spannplatte mit wenigstens einem Elektropermanentmagnet gespannt werden. Die so auf der Spannplatte in definierter Position gespannten Werkstücke werden dann einer Maschine zugeführt, wo die Werkstücke bearbeitet werden. Typischerweise ist dabei die Maschine als Werkzeugmaschine ausgebildet.

Bei bekannten Spannsystemen wird durch Anschluss eines Steckers und Einlesen von impulsförmigen Signalen der Elektropermanentmagnet magnetisiert und damit das Werkstück auf der Spannplatte gespannt.

Danach wird der Stecker wieder entfernt und die Spannplatte mit dem Werkstück wird der Maschine zur Bearbeitung zugeführt.

Problematisch hierbei ist, dass dann, wenn kein Leitrechnersystem zur Steuerung des gesamten Arbeitsprozesses vorhanden ist, eine Kontrolle fehlt, ob das Werkstück tatsächlich auf der Spannplatte gespannt ist, wenn der Bearbeitungsprozess mit der Maschine durchgeführt wird.

Dies stellt ein erhebliches Gefahrenpotential dar, da eine Bearbeitung eines nicht auf der Spannplatte fixierten Werkstücks erhebliche Schäden, insbesondere an der Maschine verursachen kann, oder sogar zu Gefährdungen von Personen führen kann.

Die US 2010/013583 A1 betrifft eine magnetische Fixiervorrichtung zum Klemmen eines Objekts mittels Magnetkräften. Zum Klemmen des Objekts sind mehrere Alnico-Magnete vorgesehen, deren Polarität umschaltbar ist. Als Anzeigemittel kann ein Permanentmagnet und ein weiterer Alnico-Magnet mit einer Spule vorgesehen sein. Je nach dem, ob die Spule bestromt wird oder nicht, wird ein farbiges Anzeigeelement in eine aus- oder eingefahrene Position überführt.

Die WO 2013/021257 A2 betrifft ein magnetisches Spannsystem mit einer Anzeigeeinheit zur Anzeige der Magnetisierung von Magnetmodulen. Die Anzeigeeinheit ist bistabil und benötigt keine Energieversorgung.

Die JP 2005- 118 908 A betrifft eine magnetische Fixiervorrichtung zum Fixieren eines Werkstücks mittels Magnetkräften. Der Zustand der Magnetisierung von Magneten der Fixiervorrichtung wird mit einer Anzeigeeinheit angezeigt, die ein magnetisches Element aufweist, das abhängig von Magnetkräften bewegt wird. Insbesondere kann das magnetische Element eine in einer Röhre gelagerte Kugel sein, die durch Magnetkräfte gegen die Federkraft einer Feder bewegt werden kann.

Die KR 10 1 613 162 B1 betrifft eine Fixiervorrichtung zum Klemmen eines Werkstücks mittels Magnetkräften. Die Fixierungsvorrichtung weist eine Sensoreinheit zur Erfassung der wirkenden Magnetkräfte auf. Abhängig hiervon steuert ein Signalprozessor ein Anzeigemittel in Form von Leuchtdioden an.

Die WO 03/009972 A2 betrifft ein magnetisches Spannsystem mit einem schaltbaren Magneten. Mit Sensoren werden dessen Magnetkräfte erfasst.

Die FR 1 414 151 A betrifft ein magnetisches Spannsystem mit einer Anzeigeeinheit zur Anzeige des Zustandes des Spannsystems.

Die WO 2008/142716 A2 betrifft ein magnetisches Spannsystem mit einer Selbsttest-Einheit.

Der Erfindung liegt die Aufgabe zugrunde die Funktionssicherheit eines Spannsystems der eingangs genannten Art zu erhöhen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Spannsystem mit wenigstens einem Elektropermanentmagnet, wobei ein Werkstück durch eine Magnetisierung des Elektropermanentmagnets auf diesem gespannt wird. Erfindungsgemäß sind Anzeigemittel vorgesehen, welche bei der Magnetisierung des Elektropermanentmagnets selbsttätig in einem die Magnetisierung des Elektropermanentmagnets signalisierenden Signalzustand wechseln. Die Anzeigemittel weisen ein in einer Aufnahme am Elektropermanentmagnet gelagertes Anzeigeelement mit einem Magneten auf, welches durch Magnetisierung des Elektropermanentmagnets von einer in der Aufnahme eingefahrenen Position in eine aus der Aufnahme ausgefahrene, den Signalzustand bildende Position überführt ist. Das Anzeigeelement ist durch Magnetkräfte des magnetisierten Elektropermanentmagnets in die ausgefahrene Position überführt, wobei das Anzeigeelement gegen die Federkraft einer Feder in die ausgefahrene Position überführt wird.

Der Grundgedanke der Erfindung besteht somit darin, den magnetisierten Zustand des Elektropermanentmagnets des Spannsystem mit Anzeigemitteln zu signalisieren, wobei wesentlich ist, dass diese Signalisierung fortwährend während der gesamten Dauer der Magnetisierung des Elektropermanentmagnets erfolgt.

Dabei bedeutet generell der Begriff "Magnetisierung" des Elektropermanentmagnets, dass in diesem Zustand des Elektropermanentmagnets ein vorzugsweise metallisches Werkstück durch die Magnetkräfte des Elektropermanentmagnets gespannt, das heißt an diesem fixiert wird. Entsprechend bedeutet der Begriff "Aufhebung der Magnetisierung", dass in diesem Zustand der Elektropermanentmagnet keine das Werkstück fixierende Magnetkräfte ausübt. Demzufolge bedeutet "magnetisierter Zustand" einen "eingeschalteten Zustand" des Elektropermanentmagnets, in welchen das Werkstück am Elektropermanentmagnet gespannt ist. Entsprechend bedeutet "aufgehobene Magnetisierung" einen "ausgeschalteten Zustand" des Elektropermanentmagnets, in welchem das Werkstück am Elektropermanentmagnet nicht gespannt ist.

Dadurch wird eine sichere Prozesskontrolle ermöglicht, da mit den erfindungsgemäßen Anzeigemitteln dauerhaft und sicher angezeigt wird, ob das Werkstück auf dem Elektropermanentmagnet gespannt ist oder nicht.

Diese Prozesskontrolle erfolgt insbesondere auch dann fortdauernd, wenn das Werkstück einer Maschine, insbesondere einer Werkzeugmaschine, zur Bearbeitung zugeführt ist. Damit werden Gefahrensituationen derart, dass die Maschine einen Bearbeitungsprozess startet, wenn das Werkstück auf dem Spannsystem nicht gespannt ist, sicher vermieden.

Ein weiterer wesentlicher Vorteil der Erfindung besteht darin, dass das Anzeigemittel unmittelbar durch die Magnetisierung des Elektropermanentmagnets selbst in den Signalzustand, der die Magnetisierung anzeigt, überführt ist. Dadurch wird eine hohe Funktionssicherheit und Fehlersicherheit erzielt, da falsche Signalzustände der Anzeigemittel sicher vermieden werden.

Erfindungsgemäß weisen die Anzeigemittel ein in einer Aufnahme am Elektropermanentmagnet gelagertes Anzeigeelement auf, welches durch Magnetisierung des Elektropermanentmagnets von einer in der Aufnahme eingefahrenen Position in eine aus der Aufnahme ausgefahrene, den Signalzustand bildende Position überführt ist.

Dabei ist das Anzeigeelement durch Magnetkräfte des magnetisierten Elektropermanentmagnets in die ausgefahrene Position überführt.

Das vorzugsweise in Form eines Stößels ausgebildete Anzeigeelement signalisiert somit durch seine Position eindeutig, ob der Elektropermanentmagnet magnetisiert ist oder nicht, wodurch eine sichere Erkennung des Magnetisierungszustands ermöglicht wird. Dabei muss das Anzeigeelement in der eingefahrenen Position nicht vollständig in der Aufnahme liegen und in der ausgefahrenen Position nicht vollständig aus der Aufnahme ausgefahren sein. Wesentlich ist lediglich, dass beide Positionen eindeutig voneinander unterscheidbar sind.

Weiter ist wesentlich, dass bei einer Magnetisierung des Elektropermanentmagnets durch die von dessen generierten Magnetkräfte das Anzeigeelement in den ausgefahrenen Zustand überführt wird. Dies wird dadurch erreicht, dass im Anzeigeelement selbst ein Magnet integriert ist, der vom Elektropermanentmagnet abgestoßen wird, wenn dieser magnetisiert ist, der vom Elektropermanentmagnet abgestoßen wird, wenn dieser magnetisiert wird. Damit ist gewährleistet, dass die ausgefahrene Position des Anzeigeelements nur bei magnetisiertem Elektropermanentmagnet eingenommen wird, wodurch der Magnetisierungszustand des Elektropermanentmagnets sicher und fehlerfrei angezeigt wird.

Bei Aufhebung der Magnetisierung des Elektropermanentmagnets wird das Anzeigeelement selbsttätig in die eingefahrene Position überführt.

Damit zeigt das Anzeigeelement sicher und zuverlässig beide Magnetisierungszustände des Elektropermanentmagnets an.

Erfindungsgemäß wird hierzu das Anzeigeelement gegen die Federkraft einer Feder in die ausgefahrene Position überführt.

Diese Federkraft bewirkt oder unterstützt das Überführen des Anzeigeelements in die eingefahrene Position bei Aufhebung der Magnetisierung.

Gemäß einer ersten Variante ist die Aufhebung der Magnetisierung durch eine Entmagnetisierung des Elektropermanentmagnets bewirkt. Durch Magnetkräfte des Elektropermanentmagnets ist das Anzeigeelement in die eingefahrene Position überführt.

In diesem Fall wird durch eine magnetische Anziehungskraft zwischen den in Anzeigeelementen integrierten Magneten und dem ungepolten Elektropermanentmagnet das Anzeigeelement selbsttätig in die eingefahrene Position überführt. In diesem Fall wirkt die Federkraft der Feder nur unterstützend bei Einfahren des Anzeigeelements in die eingefahrene Position und kann gegebenenfalls sogar komplett weggelassen werden.

Gemäß einer zweiten Variante ist die Aufhebung der Magnetisierung durch eine Entmagnetisierung des Elektropermanentmagnets bewirkt. Durch die Federkräfte der Feder ist das Anzeigeelement in die eingefahrene Position überführt.

Da in diesem Fall bei Aufhebung der Magnetisierung der Elektropermanentmagnete das Anzeigeelement nicht durch Magnetkräfte in die eingefahrene Position überführt wird, ist hierzu die Federkraft der Feder zwingen erforderlich.

Gemäß einer vorteilhaften Ausführungsform der Erfindung ist das Anzeigeelement in der ausgefahrenen Position mit Sensormitteln erfassbar.

Diese Sensormittel können insbesondere im Bereich der das Werkstück bearbeitenden Maschine, insbesondere der Werkzeugmaschine angeordnet sein. Damit kann mit den Sensormitteln eine Gefahrenabsicherung durchgeführt werden, in dem insbesondere kontrolliert werden kann, ob das Werkstück während der Bearbeitung in der Maschine auch tatsächlich eingespannt ist, wodurch Gefahrensituationen vermieden werden.

Dabei können zweckmäßig die Sensormittel von optischen, induktiven oder taktilen Sensoren gebildet sein.

Die taktilen Sensoren können von Nockenschaltern gebildet sein, die insbesondere in der Maschine integriert sein können. Als optische Sensoren können Lichttaster, Lasersensoren, insbesondere in Form von Distanzsensoren vorgesehen sein. Weiterhin können induktive Sensoren in Form von Näherungsschaltern vorgesehen sein.

Vorteilhaft werden in den Sensormitteln generierte Sensorsignale einer Steuereinheit zugeführt, in welcher aus den Sensorsignalen Steuersignale zur Steuerung einer Maschine, mit der das Werkstück bearbeitet wird, generiert werden.

Dabei wird zweckmäßig in der Steuereinheit eine Bearbeitung des Werkstücks mit der Maschine nur dann freigegeben, wenn mit den Sensormitteln das Anzeigeelement in der ausgefahrenen Position detektiert wird.

Durch die Überwachung der Position mit den Sensormitten erfolgt eine zeitlich lückenlose Erfassung des Magnetisierungszustands des Elektropermanentmagnets. Da abhängig von den Sensorsignalen die das Werkstück bearbeitende Maschine gesteuert werden, werden während der gesamten Prozessdauer dieses Systems Gefahrensituationen sicher vermieden.

Gemäß einer zweckmäßigen Ausgestaltung der Erfindung weist das Spannsystem eine Schnittstelle zum Anschluss eines Schnittstellenmoduls auf, wobei über das Schnittstellenmodul Signale zum Magnetisieren oder Entmagnetisieren des Elektropermanentmagnets einlernbar sind. Insbesondere ist das Schnittstellenmodul ein Stecker.

Durch das Einlesen der Signale, die insbesondere in Form von elektrischen Impuls-Signalen gebildet sind, kann der Elektropermanentmagnet einfach und schnell magnetisiert beziehungsweise entmagnetisiert werden. Hierzu wird üblicherweise das Schnittstellenmodul, insbesondere der Stecker, nur kurzzeitig an den Elektropermanentmagnet angeschlossen. Ist das Schnittstellenmodul nicht angeschlossen, kann darüber auch keine Kontrolle des Magnetisierungszustands des Elektropermanentmagnets erfolgen. Dieses Problem wird durch die von den Sensormitteln kontrollierten Anzeigemittel vollständig gelöst, da mit diesen der Magnetisierungszustand des Elektropermanentmagnets zeitlich lückenlos überwacht werden kann.

Die Erfindung wird im Folgenden anhand der Zeichnungen erläutert. Es zeigen:
- Figur 1:: Ausführungsbeispiel des erfindungsgemäßen Spannsystems.
- Figur 2:: Draufsicht auf den Elektropermanentmagnet des Spannsystems bei magnetisiertem Zustand.
- Figur 3:: Teildarstellung des Elektropermanentmagnets im magnetisierten Zustand mit zugeordneten Anzeigemitteln.
- Figur 4:: Vergrößerte Teildarstellung der Anordnung gemäß Figur 3.
- Figur 5:: Darstellung an den Anzeigemitteln zugeordneten Sensormitteln.

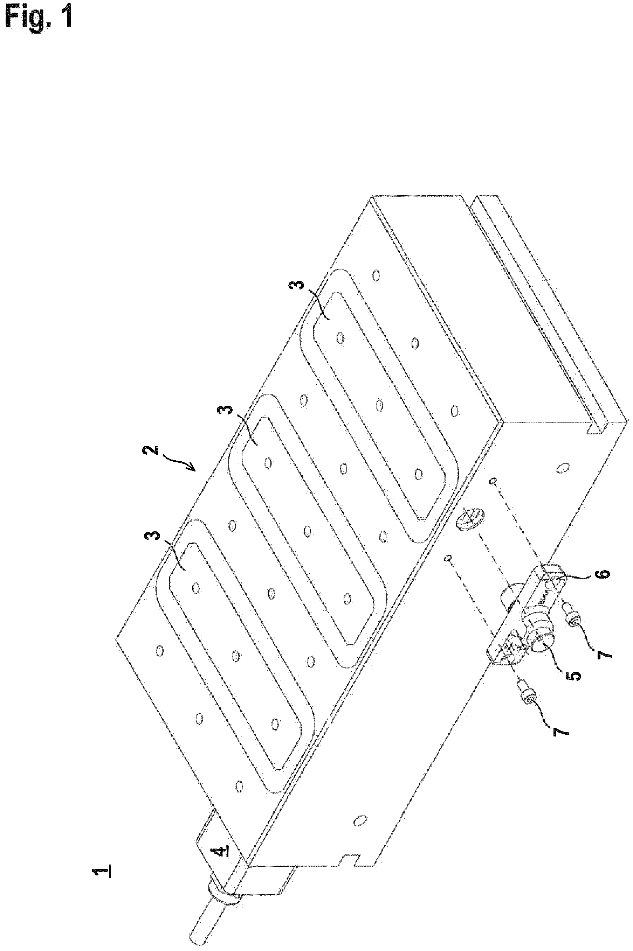

Figur 1 zeigt schematisch ein Ausführungsbeispiel des erfindungsgemäßen Spannsystems 1. Das Spannsystem 1 besteht im Wesentlichen aus einer Palette 2 oder allgemein einer Spannplatte mit einem darin integrierten Elektropermanentmagnet 3. Generell kann auch eine Anordnung mit mehreren Elektropermanentmagneten 3 vorgesehen sein.

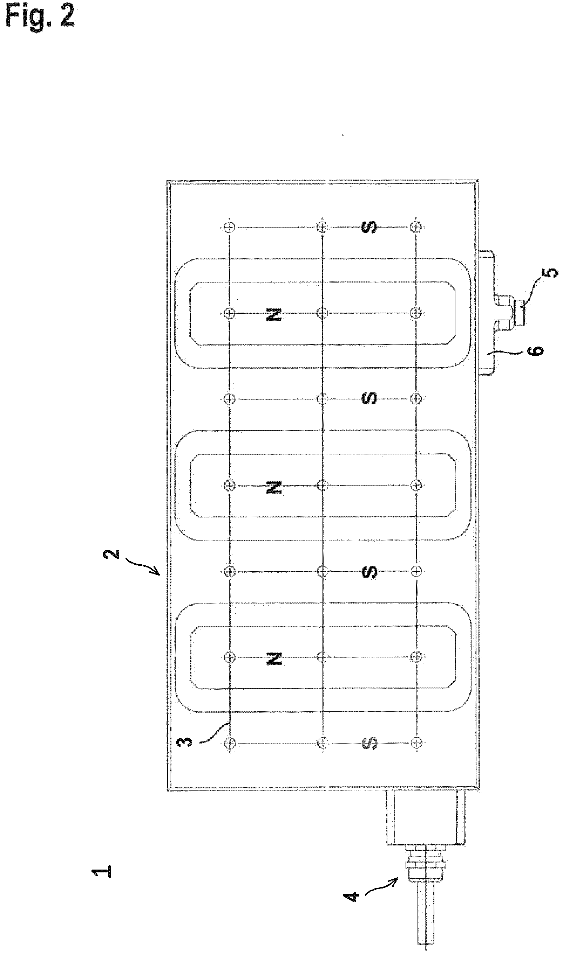

Wie Figur 1 und die Draufsicht dieser Anordnung gemäß Figur 2 zeigt, ist an die Palette 2 an einer nicht gesondert dargestellten Schnittstelle ein Schnittstellenmodul in Form eines Steckers 4 angeschlossen. Über den Stecker 4 werden elektrische Signale in Form von Impuls-Signalen in das Spannsystem 1 eingelesen. Mit ersten Impuls-Signalen wird der Elektropermanentmagnet 3 eingeschaltet, das heißt derart magnetisiert, dass mit den Magnetkräften des Elektropermanentmagnets 3 nicht dargestelltes, vorzugsweise metallisches Werkstück auf dem Spannsystem 1 gespannt wird. Mit zweiten Impuls-Signalen, die über den Stecker 4 in das Spannsystem 1 eingelesen werden, wird der Elektropermanentmagnet 3 ausgeschaltet, das heißt die das Spannen des Werkstücks bewirkende Magnetisierung wird aufgehoben.

Nach Einschalten des Magneten wird der Stecker 4 abgenommen und die Palette 2 mit dem darauf gespannten Werkstück wird einer nicht dargestellten Maschine zugeführt, wo das Werkstück bearbeitet wird. Im vorliegenden Fall ist die Maschine eine Werkzeugmaschine.

Da der Stecker 4 abgenommen ist, kann über die Schnittstelle des Spannsystems 1 nicht mehr kontrolliert werden, ob das Werkstück auf dem Elektropermanentmagnets 3 gespannt wurde oder nicht.

Erfindungsgemäß sind daher zur Kontrolle, ob das Werkstück auf dem Elektropermanentmagnet 3 gespannt ist oder nicht, am Spannsystem 1 Anzeigemittel vorgesehen.

Die Anzeigemittel umfassen ein Anzeigeelement 5 in Form eines Stößels, das in einer seitlich an der Palette 2 vorgesehenen Aufnahme 6 gelagert ist. Dabei ist das Anzeigeelement 5 in axialer Richtung verschiebbar in der Aufnahme 6 gelagert.

Wie Figur 1 zeigt, wird die Aufnahme 6 mit Schrauben 7 an einer Seitenwand der Palette 2 befestigt.

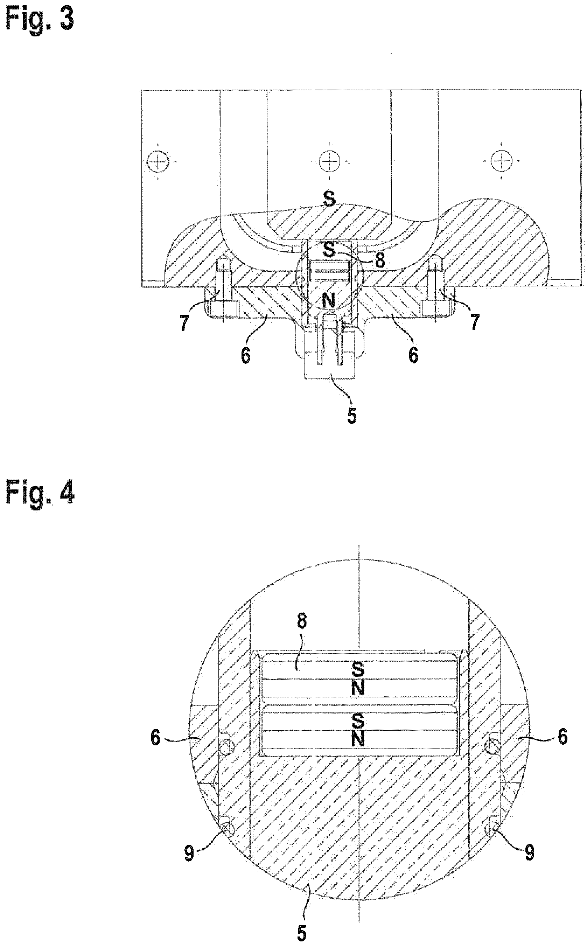

Das Anzeigeelement 5 grenzt direkt an ein Segment des Elektropermanentmagnet 3 an, wobei das Anzeigeelement 5 in einer Bohrung der Aufnahme 6 verschiebbar gelagert ist. Am hinteren, dem Elektropermanentmagnet 3 zugewandten Ende des Anzeigeelement 5 befindet sich ein Magnet 8 (Figur 3 und 4). Das Anzeigeelement 5 ist von einer Feder 9 umschlossen, wie insbesondere aus Figur 4 ersichtlich.

Im vorliegenden Fall erfolgt das Einschalten und Ausschalten des Elektropermanentmagnets 3 durch ein Umpolen der Magnetisierung des Elektropermanentmagnets 3. Figur 2 zeigt dabei wie auch Figur 3 den eingeschalteten Zustand des Elektropermanentmagnets 3.

Generell kann der Elektropermanentmagnet 3 im ausgeschalteten Zustand auch entmagnetisiert sein.

Die Funktionsweise der Anzeigemittel ist derart, dass der Elektropermanentmagnet 3 im eingeschalteten Zustand (Figur 3) eine Magnetisierung derart aufweist, dass auf den Magneten 8 des Anzeigeelements 5 durch den Elektropermanentmagnet 3 eine abstoßende Magnetkraft ausgeübt wird, so dass das Anzeigeelement 5 gegen die Federkraft der Feder 9 in eine aus der Aufnahme 6 ausgefahrene Position ausgefahren ist, wie Figur 3 zeigt. Solange der Elektropermanentmagnet 3 im eingeschalteten Zustand ist, wird die ausgefahrene Position des Anzeigeelements 5 beibehalten. Diese ausgefahrene Position stellt somit einen Signalzustand dar, mit dem der eingeschaltete Zustand des Elektropermanentmagnets 3 und damit das Spannen des Werkstücks auf dem Spannsystem 1 signalisiert wird.

Durch die Magnetisierung des Elektropermanentmagnets 3 im eingeschalteten Zustand wird somit das Anzeigeelement 5 selbsttätig in die angefahrene Position überführt, wodurch signalisiert wird, dass das Werkstück mit dem Elektropermanentmagnet 3 gespannt wird. Ebenso wird das Anzeigeelement 5 bei ausgeschaltetem Zustand des Elektropermanentmagnets 3 selbsttätig in die eingefahrene Position überführt, in welcher nur noch der Kopf des Anzeigeelements 5 über die Aufnahme 6 hervorsteht. Im vorliegenden Fall verfolgt das Überführen des Anzeigeelements 5 in die eingefahrene Position durch die Magnetkraft des umgepolten Elektropermanentmagnets 3, unterstützt durch die Federkraft der Feder 9.

Bei einer Ausführungsform, bei welcher der Elektropermanentmagnet 3 im ausgeschalteten Zustand entmagnetisiert ist, erfolgt die Überführung des Anzeigeelements 5 in die eingefahrene Position allein mit der Federkraft der Feder 9, unterstützt durch die Magnete 8.

Vorteilhaft sind, insbesondere im Bereich der Werkzeugmaschine, Sensormittel vorgesehen, mittels derer erfasst wird, ob sich das Anzeigeelement 5 in der eingefahrenen oder ausgefahrenen Position befindet.

Dabei können die Sensormittel von optischen, induktiven oder taktilen Sensoren gebildet sein.

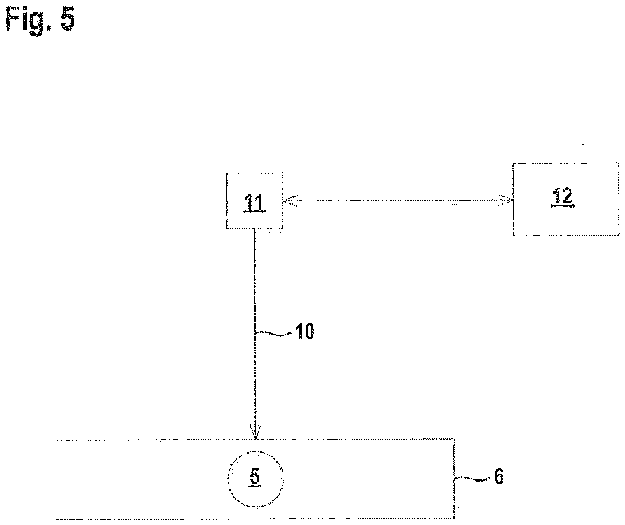

Im vorliegenden Fall ist ein Lichtstrahlen 10 emittierender Lichttaster 11 als Sensormittel vorgesehen. Die mit den Sensormitteln generierten Sensorsignale werden einer Steuereinheit 12 zugeführt (Figur 5).

Mit dem Lichttaster 11 wird festgestellt, ob das Anzeigeelement 5 in der ein-oder ausgefahrenen Position ist.

Der Lichttaster 11 generiert abhängig hiervon als Sensorsignale ein binäres Schaltsignal, das der Steuereinheit 12 angeführt wird.

Abhängig von diesen Sensorsignalen generiert die Steuereinheit 12 Steuersignale, die insbesondere zur Steuerung der Werkzeugmaschine dienen.

Vorteilhaft erfolgt die Steuerung derart, dass der Betrieb der Werkzeugmaschine zur Bearbeitung des Werkstücks nur dann freigegeben wird, wenn mit dem Lichttaster 11 detektiert wird, dass das Anzeigeelement 5 in der ausgefahrenen Position ist, wodurch signalisiert wird, dass das Werkstück gespannt ist.

### Bezugszeichenliste

- (1): Spannsystem
- (2): Palette
- (3): Elektropermanentmagnet
- (4): Stecker
- (5): Anzeigeelement
- (6): Aufnahme
- (7): Schraube
- (8): Magnet
- (9): Feder
- (10): Lichtstrahl
- (11): Lichttaster
- (12): Steuereinheit

## Patentansprüche

1. Spannsystem (1) mit wenigstens einem Elektropermanentmagnet (3), wobei ein Werkstück durch eine Magnetisierung des Elektropermanentmagnets (3) auf diesem gespannt wird, wobei Anzeigemittel vorgesehen sind, welche bei der Magnetisierung des Elektropermanentmagnets (3) selbsttätig in einen die Magnetisierung des Elektropermanentmagnets (3) signalisierenden Signalzustand wechseln, wobei die Anzeigemittel ein in einer Aufnahme (6) am Elektropermanentmagnet (3) gelagertes Anzeigeelement (5) mit einem Magneten (8) aufweisen, **dadurch gekennzeichnet, dass** das Anzeigeelement (5) durch Magnetisierung des Elektropermanentmagnets (3) von einer in der Aufnahme (6) eingefahrenen Position in eine aus der Aufnahme (6) ausgefahrene, den Signalzustand bildende Position überführt ist, wobei das Anzeigeelement (5) durch Magnetkräfte des magnetisierten Elektropermanentmagnets (3) in die ausgefahrene Position überführt ist, und wobei das Anzeigeelement (5) gegen die Federkraft einer Feder (9) in die ausgefahrene Position überführt wird.

2. Spannsystem (1) nach Anspruch 1, **dadurch gekennzeichnet, dass** das Anzeigeelement (5) in Form eines Stößels ausgebildet ist.

3. Spannsystem (1) nach einem der Ansprüche 1 oder 2, **dadurch gekennzeichnet, dass** bei Aufhebung der Magnetisierung des Elektropermanentmagnets (3) das Anzeigeelement (5) selbsttätig in die eingefahrene Position überführt ist.

4. Spannsystem (1) nach Anspruch 3, **dadurch gekennzeichnet, dass** die Aufhebung der Magnetisierung durch eine Gegenpolarisierung des Elektropermanentmagnets (3) bewirkt ist, und dass durch Magnetkräfte des Elektropermanentmagnets (3) das Anzeigeelement (5) in die eingefahrene Position überführt ist.

5. Spannsystem (1) nach Anspruch 4, **dadurch gekennzeichnet, dass** die Aufhebung der Magnetisierung durch eine Entmagnetisierung des Elektropermanentmagnets (3) bewirkt ist, und dass durch die Federkräfte der Feder (9) das Anzeigeelement (5) in die eingefahrene Position überführt ist.

6. Spannsystem (1) nach einem der Ansprüche 1 bis 5, **dadurch gekennzeichnet, dass** das Anzeigeelement (5) in der ausgefahrenen Position mittels Sensormitteln erfassbar ist.

7. Spannsystem (1) nach Anspruch 6, **dadurch gekennzeichnet, dass** die Sensormittel von optischen, induktiven oder taktilen Sensoren gebildet sind.

8. Spannsystem (1) nach einem der Ansprüche 6 oder 7, **dadurch gekennzeichnet, dass** in den Sensormitteln generierte Sensorsignale einer Steuereinheit (12) zugeführt werden, in welcher aus den Sensorsignalen Steuersignale zur Steuerung einer Maschine, mit der das Werkstück bearbeitet wird, generiert werden.

9. Spannsystem (1) nach Anspruch 8, **dadurch gekennzeichnet, dass** in der Steuereinheit (12) eine Bearbeitung des Werkstücks mit der Maschine nur dann freigegeben wird, wenn mit den Sensormitteln das Anzeigeelement (5) in der ausgefahrenen Position detektiert wird.

10. Spannsystem (1) nach einem der Ansprüche 1 bis 9, **dadurch gekennzeichnet, dass** dieses eine Schnittstelle zum Anschluss eines Schnittstellenmoduls aufweist, wobei über das Schnittstellenmodul Signale zum Magnetisieren oder Entmagnetisieren des Elektropermanentmagnets (3) einlesbar sind.

11. Spannsystem (1) nach Anspruch 10, **dadurch gekennzeichnet, dass** das Schnittstellenmodul ein Stecker (4) ist.

## Claims

1. Clamping system (1) with at least one electro-permanent magnet (3), wherein a workpiece is clamped on the electromagnets (3) by magnetising the electromagnets (3), wherein display means are provided which, when the electromagnets (3) are magnetised, automatically switch to a signal state indicating the magnetisation of the electromagnets (3), wherein the display means comprise a display element (5) mounted in a holder (6) on the electromagnets (3) with a magnet (8), **characterised in that** the display element (5) is transferred by magnetisation of the electro-permanent magnet (3) from a position retracted into the receptacle (6) into a position extended out of the receptacle (6) forming the signal state, wherein the display element (5) being moved into the extended position by magnetic forces of the magnetised electromagnets (3), and wherein the display element (5) is moved into the extended position against the spring force of a spring (9).

2. Clamping system (1) according to claim 1, **characterised in that** the display element (5) is designed in the form of a tappet.

3. Clamping system (1) according to one of claims 1 or 2, **characterised in that** when the magnetisation of the electro-permanent magnet (3) is cancelled, the display element (5) is automatically moved into the retracted position.

4. Clamping system (1) according to claim 3, **characterised in that** the cancellation of the magnetisation is carried out by a counter-polarisation of the electro-permanent magnet (3) and that the display element (5) is moved into the retracted position by the magnetic force of the electro-permanent magnet (3).

5. Clamping system (1) according to claim 4, **characterised in that** the magnetisation is cancelled by demagnetising the electro-permanent magnet (3) and that the spring forces of the spring (9) move the display element (5) into the retracted position.

6. Clamping system (1) according to one of claims 1 to 5, **characterised in that** the display element (5) can be detected in the extended position by means of sensor means.

7. Clamping system (1) according to claim 6, **characterised in that** the sensor means are formed by optical, inductive or tactile sensors.

8. Clamping system (1) according to one of claims 6 or 7, **characterised in that** sensor signals generated in the sensor means are fed to a control unit (12), in which control signals for controlling a machine with which the workpiece is machined are generated from the sensor signals.

9. Clamping system (1) according to claim 8, **characterised in that** the control unit (12) only authorises machining of the workpiece with the machine if the sensor means detect the display element (5) in the extended position.

10. Clamping system (1) according to one of claims 1 to 9, **characterised in that** it has an interface for connecting an interface module, whereby signals for magnetising or demagnetising the electro-permanent magnet (3) can be read in via the interface module.

11. Clamping system (1) according to claim 10, **characterised in that** the interface module is a plug (4).

## Revendications

1. Système de serrage (1) comprenant au moins un aimant électropermanent (3), dans lequel une pièce à usiner est serrée sur les électroaimants (3) par magnétisation des électroaimants (3), dans lequel sont prévus des moyens d'affichage qui, lorsque les électroaimants (3) sont magnétisés, passent automatiquement à un état de signal indiquant la magnétisation des électroaimants (3), dans lequel les moyens d'affichage comprennent un élément d'affichage (5) monté dans un support (6) sur les électroaimants (3) avec un aimant (8), **caractérisé en ce que** l'élément d'affichage (5) est transféré par magnétisation de l'aimant électropermanent (3) d'une position rétractée dans le réceptacle (6) à une position sortie du réceptacle (6) formant l'état de signal, dans lequel l'élément d'affichage (5) est déplacé dans la position sortie par les forces magnétiques des électroaimants magnétisés (3), et dans lequel l'élément d'affichage (5) est déplacé dans la position déployée contre la force d'un ressort (9).

2. Système de serrage (1) selon la revendication 1, **caractérisé en ce que** l'élément d'affichage (5) est conçu sous la forme d'un poussoir.

3. Système de serrage (1) selon l'une des revendications 1 ou 2, **caractérisé en ce que** lorsque la magnétisation de l'aimant électropermanent (3) est annulée, l'élément d'affichage (5) est automatiquement déplacé dans la position rétractée.

4. Système de serrage (1) selon la revendication 3, **caractérisé en ce que** l'annulation de la magnétisation est effectuée par une contre-polarisation de l'aimant électropermanent (3) et **en ce que** l'élément d'affichage (5) est déplacé dans la position rétractée par la force magnétique de l'aimant électropermanent (3).

5. Système de serrage (1) selon la revendication 4, **caractérisé en ce que** la magnétisation est annulée par démagnétisation de l'aimant électropermanent (3) et **en ce que** les forces élastiques du ressort (9) déplacent l'élément d'affichage (5) dans la position rétractée.

6. Système de serrage (1) selon l'une des revendications 1 à 5, **caractérisé en ce que** l'élément d'affichage (5) peut être détecté dans la position déployée par des moyens de détection.

7. Système de serrage (1) selon la revendication 6, **caractérisé en ce que** les moyens de détection sont constitués de capteurs optiques, inductifs ou tactiles.

8. Système de serrage (1) selon l'une des revendications 6 ou 7, **caractérisé en ce que** les signaux de capteur générés dans les moyens de détection sont transmis à une unité de commande (12) dans laquelle des signaux de commande pour commander une machine avec laquelle la pièce à usiner est usinée sont générés à partir des signaux de capteur.

9. Système de serrage (1) selon la revendication 8, **caractérisé en ce que** l'unité de commande (12) n'autorise l'usinage de la pièce à usiner avec la machine que si les moyens de détection détectent l'élément d'affichage (5) en position déployée.

10. Système de serrage (1) selon l'une des revendications 1 à 9, **caractérisé en ce qu'**il comporte une interface pour connecter un module d'interface, grâce à laquelle des signaux pour magnétiser ou démagnétiser l'aimant électropermanent (3) peuvent être lus via le module d'interface.

11. Système de serrage (1) selon la revendication 10, **caractérisé en ce que** le module d'interface est une fiche (4).
